# EUROPÄISCHE PATENTSCHRIFT

(11) **EP 4 341 759 B1**
(45) Veröffentlichungstag und Bekanntmachung des Hinweises auf die Patenterteilung: **31.12.2025**
(21) Anmeldenummer: 22764798.9
(22) Anmeldetag: 16.08.2022
(51) Int. Cl.: G05B 23/02

(54) **ALARMASSOZIIERTE CONTAINER IN ANLAGENBILDERN TECHNISCHER ANLAGEN**
ALARM-ASSOCIATED CONTAINERS IN IMAGES OF INDUSTRIAL PLANTS
CONTENEUR ASSOCIÉ À UNE ALARME DANS LES PHOTOS D'INSTALLATION DES INSTALLATIONS TECHNIQUES

(30) Priorität: 18.08.2021 EP 21191974
(43) Veröffentlichungstag der Anmeldung: 27.03.2024
(73) Patentinhaber: Siemens Aktiengesellschaft, 80333 München (DE)
(72) Erfinder: LUTZ, Benjamin, 76327 Pfinztal (DE)
(74) Vertreter: Siemens Patent Attorneys
(86) Internationale Anmeldenummer: PCT/EP2022/072872
(87) Internationale Veröffentlichungsnummer: WO 2023/021041

(56) Entgegenhaltungen:
- EP-A1- 3 079 029
- EP-A1- 3 495 903
- US-A1- 2018 286 723

## Beschreibung

Die Erfindung betrifft ein Leitsystem für eine technische Anlage, insbesondere Prozess- oder Fertigungsanlage, das einen Operator Station Server und einen Operator Station Client aufweist, wobei der Operator Station Server dazu ausgebildet ist, zur Bedienung und Beobachtung ein Anlagenbild der technischen Anlage an den Operator Station Client zu übertragen, wobei das Anlagenbild wenigstens ein variables Bildelement umfasst, und wobei der Operator Station Client dazu ausgebildet ist, das Anlagenbild mit dem variablen Bildelement einem Operator der technischen Anlage visuell, und gegebenenfalls akustisch, darzustellen, und wobei auf dem Operator Station Server ein Alarmdienst implementiert ist, der dazu ausgebildet ist, im Leitsystem aufkommende Alarmmeldungen zur Darbietung für den Operator an den Operator Station Client zu übertragen. Außerdem betrifft die Erfindung ein Verfahren zur visuellen Darstellung eines Anlagenbildes einer technischen Anlage.

Für die Bedienung und Beobachtung verfahrenstechnischer Anlagen erstellen Leitsysteme der verfahrenstechnischen Anlagen symbolische Anlagenbilder, die die verfahrenstechnischen Zusammenhänge - insbesondere zwischen einzelnen Prozessobjekten der verfahrenstechnischen Anlagen - abstrahiert darstellen.

Anlagenbilder setzen sich aus statischen Symbolen (z.B. Leitungen, Rechtecke, usw.), dynamisierten Symbolen (z.B. Leitungen mit Farbumschlag oder Rechtecke mit Füllständen, die sich in Abhängigkeit von Prozessmesswerten ändern), Blocksymbolen (zur dynamisierten Visualisierung verfahrenstechnischer Prozessobjekte), komplexen Controls (z.B. Trendanzeigen, Meldefolgeanzeigen, usw.) und Containern zusammen, in welchen Inhalte aus unabhängigen und eigenständige Quellen visualisiert werden können. Bei diesen Quellen kann es sich beispielsweise um Webcams, Anlagenbilder modularer Anlagenteile (sogenannte "Package Units"), Apps (z.B. Regleroptimierer, KPI-Berechnungen) und dergleichen handeln.

Die Container werden durch unterschiedliche Technologien realisiert. In modernen weborientierten Leitsystemen können hierzu sogenannte "iFrames" verwendet werden, die beispielsweise in der von der Firma SIEMENS verwendeten SWAC-Technologie Anwendung finden (SWAC steht hierbei für "Siemens Web Application Collaboration") .

Auch die zuvor genannten komplexen Controls (Trendanzeigen, XY-Graphen, Meldefolgeanzeigen, SFC-Schrittketten, CFC-Visualisierung, Batch, usw.) können mithilfe von Containern in Anlagenbilder eingebettet werden, da so die zugrunde liegenden Applikationen serverseitig entkoppelt und verteilt werden können, um ein höheres Maß an Robustheit zu erreichen.

Falls beispielsweise mehrere Webcams eine Sicht in Echtzeit auf verfahrenstechnische Anlagenteile ermöglichen sollen, so ist für jede Webcam ein Container in einem Anlagenbild zu projektieren. Tritt in einem verfahrenstechnischen Anlagenteil ein Alarm auf, so muss das entsprechende Anlagenbild mit der Webcam geöffnet werden, welches die Sicht auf den jeweiligen Anlagenteil bereitstellt. Oftmals reichen für die effiziente Behandlung von komplexen Alarmen weder Meldetexte noch Sichten in Echtzeit aus - weiterer Kontext wie beispielsweise P&ID Diagramme, Auszüge aus Betriebshandbüchern und dergleichen kann vonnöten sein.

Bekannte Leitsysteme, die einem Operator Anlagenbilder mit verschiedenen Objekten wie Container visuell darbieten, sind beispielsweise in der WO 2020/064712 A1 und der EP 3680740 A1 offenbart.

Die EP 3 495 903 Al offenbart ein Verfahren zum Bedienen und Beobachten einer zu steuernden technischen Anlage.

In der US 2018/286723 A1 ist ein Verfahren zum Steuern eines Displays bei der Halbleiterherstellung offenbart.

Die EP 3 079 029 A1 zeigt ein Verfahren zur Fernermittlung von Benutzerinformationen in einem Gebäudeleitsystem.

Der Erfindung liegt die Aufgabe zugrunde, ein Leitsystem für eine technische Anlage anzugeben, das einem Operator des Leitsystems einen übersichtlicheren Überblick über einen Betriebszustand der technischen Anlage ermöglichen und den Operator im Fall eines Alarmzustandes der technischen Anlage zielgerichtet Informationen zur Behebung des Alarmzustandes zur Verfügung stellen kann.

Diese Aufgabe wird gelöst durch ein Leitsystem für eine technische Anlage, insbesondere eine Fertigungs- oder Prozessanlage, mit den Merkmalen des Anspruchs 1. Zudem wird die Aufgabe gelöst durch ein Verfahren zum Betrieb einer technischen Anlage, insbesondere Prozess- oder Fertigungsanlage, mit den Merkmalen des Anspruchs 7. Vorteilhafte Weiterbildungen ergeben sich aus den abhängigen Ansprüchen.

Ein Leitsystem eingangs beschriebener Art weist einen Operator Station Server und einen Operator Station Client. Dabei ist der Operator Station Server dazu ausgebildet, zur Bedienung und Beobachtung ein Anlagenbild der technischen Anlage an den Operator Station Client zu übertragen, wobei das Anlagenbild wenigstens ein variables Bildelement umfasst. Der Operator Station Client ist dazu ausgebildet, das Anlagenbild mit dem variablen Bildelement einem Operator der technischen Anlage visuell, und gegebenenfalls akustisch, darzustellen. Dabei ist auf dem Operator Station Server ein Alarmdienst implementiert, der dazu ausgebildet ist, im Leitsystem aufkommende Alarmmeldungen zur Darbietung für den Operator an den Operator Station Client zu übertragen.

Das Leitsystem ist erfindungsgemäß dadurch gekennzeichnet, dass es dazu ausgebildet ist, das variable Bildelement mit einer Referenz auf eine bestimmte aufkommbare Alarmmeldung und die bestimmte aufkommbare Alarmmeldung und/oder das variable Bildelement mit einer Referenz auf ein Objekt zu versehen, derart, dass bei einem Aufkommen der bestimmten aufkommbaren Alarmmeldung das Objekt in dem variablen Bildelement visuell und gegebenenfalls akustisch dargestellt wird. Weiterhin ist das Leitsystem dadurch gekennzeichnet, dass es dazu ausgebildet ist, in einem Zeitbereich, in dem keine der bestimmten Alarmmeldungen aufkommt, in dem variablen Bildelement eine visuelle und ggf. akustische Darstellung eines von dem oder den referenzierten Objekten verschiedenen Objektes zu erzeugen. Mit anderen Worten: Solange keine von einem variablen Bildelement referenzierte Alarmmeldung aufkommt, stellt das variable Bildelement ein initiales Objekt dar, welches von keiner referenzierten Allarmmeldungen referenziert ist (also ein "neutrales" drittes Objekt). Die initiale Bilddarstellung kann während der Projektierung der Automatisierung und/oder vom Operator vorgegeben werden.

Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem kann neben dem Operator Station Server und dem Operator Station Client beispielsweise auch sogenannte prozess- oder fertigungsnahe Komponenten umfassen, die zur Ansteuerung von Aktoren bzw. Sensoren dienen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungssystemen (wie einem Automatisierungsgerät) der technischen Anlage her und gibt Daten der technischen Anlage an sogenannte "Operator Station Clients" weiter, die zur Bedienung und Beobachtung eines Betriebs der einzelnen Funktionselemente der technischen Anlage dienen.

Der Operator Station Server kann selbst über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Unter einem Operator wird ein menschlicher Bediener der technischen Anlage verstanden. Der Operator interagiert mittels spezieller Benutzerschnittstellen mit der technischen Anlage bzw. dessen Leitsystem und steuert spezielle technische Funktionen der Anlage. Hierzu kann der Operator das Bedien- und Beobachtungssystem des Leitsystems mit dem Operator Station Server und dem Operator Station Client nutzen.

Bei dem Anlagenbild, welches der Operator Station Server an den Operator Station Client zur visuellen Darstellung überträgt, handelt es sich um ein üblicherweise für Leitsysteme verwendetes Bedienbild, welches grafische Repräsentationen einzelner Elemente der technischen Anlage umfasst und zur Darstellung eines Status der einzelnen Elemente, eines (z.B. verfahrenstechnischen) Zusammenhangs zwischen den Elementen oder dgl. dient. Die einzelnen Elemente der technischen Anlage werden in dem Anlagenbild durch jeweilige Bildelemente graphisch repräsentiert. Das Anlagenbild umfasst vorliegend wenigstens ein variables Bildelement.

Das variable Bildelement weist einen zu einer Laufzeit der technischen Anlage veränderbaren Inhalt auf, insbesondere eine Echtzeit-Bilddatenquelle, ein weiteres Anlagenbild, ein Video oder ein Dokument wie ein Rohrleitungsplan der technischen Anlage. Das variable Bildelement kann auch eine Trendanzeige für Messwerte der technischen Anlage, eine Meldefolgeanzeige für Meldungen des Leitsystems oder eine Regleroptimierungsfunktion visuell (und ggf. zusätzlich akustisch) darstellen. Man kann das variable Bildelement mit anderen Worten auch als einen sogenannten (Web-)Container bezeichnen, der variabel mit dynamisch veränderbarem Inhalt gefüllt sein kann.

Eine Alarmmeldung ist eine Meldung, die eine in der Regel unverzügliche Reaktion des Operators der technischen Anlage erfordert. Unter einer Meldung wird dabei ein Bericht vom Eintreten eines Ereignisses verstanden, das einen Übergang aus einem diskreten Zustand innerhalb der technischen Anlage in einen anderen diskreten Zustand darstellt.

Im Rahmen einer Projektierung einer Automatisierung der technischen Anlage wird unter anderem festgelegt, welche Komponenten der technischen Anlage unter welchen Bedingungen ein Aufkommen einer Alarmmeldung bedingen können. Beispielsweise kann festgelegt werden, dass eine Alarmmeldung erzeugt wird (bzw. aufkommt), wenn der Druck in einem Kessel einen bestimmten Schwellwert übersteigt.

Das erfindungsgemäße Leitsystem ermöglicht eine feingranulare Indikation des Ladezustandes des Bildelements für eine effizientere Bedienung und Beobachtung der technischen Anlage.

Der Operator erhält durch das Leitsystem Kenntnis darüber, ab wann das aufgeschlagene Anlagenbild mit dem wenigstens einen Bildelement vollständig beobachtet werden kann, bzw. welche Anteile des Bildelementes noch nachgeladen werden (müssen).

Das Leitsystem ist erfindungsgemäß dazu ausgebildet, das variable Bildelement mit einer Referenz auf eine bestimmte aufkommbare Alarmmeldung zu versehen. Die bestimmte aufkommbare Alarmmeldung ist wiederum mit einer Referenz auf ein Objekt versehbar. Die Referenzen können im Rahmen der Projektierung einer Automatisierung der technischen Anlage festgelegt werden. Es ist aber auch möglich, dass der Operator die Referenzen zu einer Laufzeit der technischen Anlage neu angelegt oder ändert. Es ist zudem möglich, dass die Referenzen von dem Leitsystem aufgrund bestimmter Bedingungen automatisch erzeugt werden.

Wenn eine aufkommbare Alarmmeldung tatsächlich aufkommt, wird das referenzierte Objekt im Rahmen des variablen Bildelements visuell und ggf. zusätzlich akustisch dargestellt. Ein Objekt stellt eine Echtzeit-Bilddatenquelle, ein weiteres Anlagenbild, ein Video oder ein Dokument dar.

Die Referenz auf das darzustellende Objekt kann mit der Alarmmeldung und/oder dem variablen Bildelement verbunden sein. Wichtig ist nur, dass bei einem Auftreten einer Alarmmeldung, die einen vorherbestimmten Typ aufweist, in einem zugewiesene variablen Bildelement das vorherbestimmte Objekt visuell (und ggf. akustisch) dargestellt wird.

Das erfindungsgemäße Leitsystem ist demnach in besonders vorteilhafter Weise dazu ausgebildet, alarmassoziierte dynamische Bildelemente (Container) in Anlagenbildern (z.B. verfahrenstechnischen Anlagenbildern) für eine verbesserte Bediendung und Beobachtung der technischen Anlage zu erzeugen. Das Leitsystem ermöglicht es, Anlagenbilder (insbesondere Übersichtsbilder) platzsparender zu gestalten, wenn Inhalte aus unabhängigen und eigenständigen Quellen (z.B. von einem Webserver gehostete Objekte) integriert werden sollen. Für die Behandlung komplexer Alarme stellt das Leitsystem effizienter und zielgerichtet einen (beliebigen) Kontext bereit. Außerdem ermöglicht es das erfindungsgemäße Leitsystem, dass ein Operator nur mit den Informationen konfrontiert wird, die er zielgerichtet für die Behandlung der Alarmmeldung Alarm benötigt.

Das Leitsystem kann dazu ausgebildet sein, in dem variablen Bildelement bei einer aufkommenden, referenzierten Alarmmeldung zusätzlich zu dem referenzierten Objekt noch Informationen die Alarmmeldung betreffend darzustellen, insbesondere einen Alarmmeldungstext. Dadurch erhält der Operator zielgerichtet sowohl die Informationen aus dem referenzierten Objekt wie auch aus der Alarmmeldung.

Das Leitsystem ist nicht auf die Darstellung / Verarbeitung eines Anlagenbildes mit einem einzigen variablen Bildelement beschränkt. Vielmehr kann das Anlagenbild eine Mehrzahl von variablen Bildelementen umfassen, wobei das Leitsystem dazu ausgebildet ist, die variablen Bildelemente jeweils mit einer Referenz auf eine bestimmte aufkommbare Alarmmeldung und die bestimmte aufkommbare Alarmmeldung und/oder die variablen Bildelemente mit einer Referenz auf ein Objekt zu versehen, derart, dass bei einem Aufkommen der bestimmten aufkommenden Alarmmeldung das Objekt jeweils in dem variablen Bildelement visuell und gegebenenfalls akustisch dargestellt wird, wobei sich die bestimmten aufkommbaren Bildelemente und die Objekte voneinander unterscheiden können.

Ebenfalls ist das Leitsystem nicht darauf beschränkt, nur eine einzige aufkommbare Alarmmeldung in einem jeweiligen variablen Bildelement zu referenzieren. Vielmehr kann das Leitsystem dazu ausgebildet sein, das variable Bildelement mit einer Mehrzahl von Referenzen auf bestimmte aufkommbare Alarmmeldungen und die bestimmten aufkommbaren Alarmmeldungen und/oder die variablen Bildelemente jeweils mit einer Referenz auf ein Objekt zu versehen, derart, dass bei einem Aufkommen eines der bestimmten aufkommbaren Alarmmeldungen das jeweilige referenzierte Objekt in dem variablen Bildelement visuell und gegebenenfalls akustisch dargestellt wird.

Dabei ist das Leitsystem bevorzugt dazu ausgebildet, für den Fall, dass mehrere der referenzierten aufkommbaren Alarmmeldungen in einem gleichen Zeitraum aufkommen, dasjenige Objekt in dem variablen Bildelement darzustellen, welches von derjenigen aufkommenden Alarmmeldung referenziert ist, welche eine höchste Priorität oder einen jüngsten Zeitrang aufweist oder welche nicht quittiert ist. Es erfolgt damit eine automatisierte Priorisierung der darzustellenden Objekte nach vorgebbaren Kriterien. Dadurch kann dem Operator besonders effektiv die am kritischsten erachtete Alarmmeldung mit dem referenzierten Objekt dargestellt werden, so dass dieser unverzüglich Maßnahmen einleiten kann.

Das Leitsystem kann auch dazu ausgebildet sein, für den Fall, dass mehrere der referenzierten aufkommbaren Alarmmeldungen in einem gleichen Zeitraum aufkommen, die von den aufkommenden Alarmmeldungen referenzierten Objekte von einem Operator des Leitsystems manuell wechselbar oder in einem automatischen zeitlichen Wechsel darzustellen. Der Operator kann dadurch einen verbesserten Überblick über Alarmmeldungen betreffende Objekte (wie beispielsweise eine Mehrzahl von Kamerabildern) erhalten.

Die zuvor formulierte Aufgabe wird zudem gelöst durch ein Verfahren zum Betrieb einer technischen Anlage, insbesondere Prozess- oder Fertigungsanlage, die ein Leitsystem aufweist, welches einen Operator Station Server und einen Operator Station Client aufweist, und wobei der Operator Station Client dazu ausgebildet ist, das Anlagenbild mit dem variablen Bildelement einem Operator der technischen Anlage visuell, und gegebenenfalls akustisch, darzustellen, und wobei auf dem Operator Station Server ein Alarmdienst implementiert ist, der dazu ausgebildet ist, im Leitsystem aufkommende Alarmmeldungen zur Darbietung für den Operator an den Operator Station Client zu übertragen.

Das Verfahren umfasst die folgenden Schritte:
a) Versehen des variablen Bildelementes mit einer Referenz auf eine bestimmte aufkommbare Alarmmeldung,
b) Versehen der bestimmten aufkommbaren Alarmmeldung mit einer Referenz auf ein Objekt,
c) Bei einem Aufkommen der bestimmten aufkommbaren Alarmmeldung, visuelle und gegebenenfalls akustische Darstellung des Objektes in dem variablen Bildelement durch den Operator Station Client, wobei das Objekt eine Echtzeit-Bilddatenquelle, ein weiteres Anlagenbild, ein Video oder ein Dokument darstellt, und wobei in einem Zeitbereich, in dem keine der bestimmten Alarmmeldungen aufkommt, in dem variablen Bildelement eine visuelle und ggf. akustische Darstellung eines von dem oder den referenzierten Objekten verschiedenen Objektes erzeugt wird.

Bevorzugt wird dabei eine Mehrzahl von variablen Bildelementen jeweils mit einer Referenz auf eine oder mehrere bestimmte aufkommbare Alarmmeldungen versehen, und bei dem die bestimmte aufkommbare oder die bestimmten aufkommbaren Alarmmeldungen jeweils mit einer Referenz auf ein Objekt versehen werden, wobei es sich um ein einziges Objekte oder um eine Mehrzahl von Objekte handeln kann, wobei bei einem Aufkommen einer der bestimmten aufkommbaren Alarmmeldungen eine visuelle und gegebenenfalls akustische Darstellung des Objektes oder der Objekte in dem oder den variablen Bildelementen durch den Operator Station Client erfolgt.

Im Rahmen einer vorteilhaften Weiterbildung der Erfindung wird in dem variablen Bildelement bei einer aufkommenden, referenzierten Alarmmeldung zusätzlich zu dem referenzierten Objekt noch Informationen die Alarmmeldung betreffend dargestellt, insbesondere eine Alarmmeldungstext.

Das variable Bildelement kann mit einer Mehrzahl von Referenzen auf bestimmte aufkommbare Alarmmeldungen und die bestimmten aufkommbaren Alarmmeldungen jeweils mit einer Referenz auf ein Objekt versehen werden, derart, dass bei einem Aufkommen eines der bestimmten aufkommbaren Alarmmeldungen das jeweilige referenzierte Objekt in dem variablen Bildelement visuell und gegebenenfalls akustisch dargestellt wird.

Bevorzugt wird für den Fall, dass mehrere der referenzierten aufkommbaren Alarmmeldungen in einem gleichen Zeitraum aufkommen, das Objekt in dem variablen Bildelement dargestellt, welches von derjenigen aufkommenden Alarmmeldung referenziert ist, welche eine höchste Priorität oder einen jüngsten Zeitrang aufweist oder welche nicht quittiert ist.

Alternativ oder zusätzlich können für den Fall, dass mehrere der referenzierten aufkommbaren Alarmmeldungen in einem gleichen Zeitraum aufkommen, die von den aufkommenden Alarmmeldungen referenzierten Objekte von einem Operator des Leitsystems manuell wechselbar oder in einem automatischen zeitlichen Wechsel dargestellt werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Es zeigen:
- FIG 1: ein erfindungsgemäßes Leitsystem in einer Prinzipskizze;
- FIG 2: ein Objektmodell eines erfindungsgemäßen Leitsystems;
- FIG 3: eine erste visuelle Darstellung eines Anlagenbildes durch ein erfindungsgemäßes Leitsystem; und
- FIG 4: eine zweite visuelle Darstellung eines Anlagenbildes durch ein erfindungsgemäßes Leitsystem.

In FGI 1 ist ein Teil eines erfindungsgemäßen Leitsystems 1 einer als Prozessanlage, d.h. als verfahrenstechnische Anlage, ausgebildeten technischen Anlage dargestellt. Das Leitsystem 1 umfasst einen Operator Station Server 2 und einen Operator Station Client 3.

Der Operator Station Server 2 und der Operator Station Client 3 sind über einen Terminalbus 4 miteinander und optional mit nicht dargestellten weiteren Komponenten des Leitsystems 1 wie einem Prozessdatenarchiv verbunden.

Ein Benutzer bzw. Operator kann zum Zwecke des Bedienens und Beobachtens über den Operator Station Client 3 mittels des Terminalbus 4 auf den Operator Station Server 2 zugreifen. Der Terminalbus 4 kann, ohne sich darauf zu beschränken, beispielsweise als Industrial Ethernet ausgebildet sein.

Der Operator Station Server 2 weist eine Geräteschnittstelle 5 auf, die mit einem Anlagenbus 6 verbunden ist. Über diese Geräteschnittstelle 5 kann der Operator Station Server 2 mit einem Automatisierungsgerät 7 sowie mit optional vorhandenen weiteren Komponenten der Prozessanlage kommunizieren. Der Anlagenbus 6 kann, ohne sich darauf zu beschränken, beispielsweise als Industrial Ethernet ausgebildet sein. Das Automatisierungsgerät 7 kann mit einer beliebigen Anzahl an Subsystemen (nicht dargestellt) verbunden sein.

Auf dem Operator Station Server 2 sind ein Alarmmeldungsdienst 8, ein Prozessabbild 9 und ein Visualisierungsdienst 10 implementiert. Der Operator Station Client 3 ist dazu ausgebildet, ein Anlagenbild 11 mit einem variablen Bildelement 12 darzustellen, worauf im weiteren Verlauf detailliert eingegangen wird.

Das Automatisierungsgerät 7 ist dazu ausgebildet, eine Automatisierung einer technischen Anlage zu steuern und zu überwachen. Hierzu ist auf dem Automatisierungsgerät ein Steuerprogramm 13 implementiert, welches im Rahmen einer Projektierung der Automatisierung der technischen Anlage auf das Automatisierungsgerät 7 geladen worden ist. Tritt beim Betrieb der technischen Anlage ein fehlerhafter Zustand auf, erzeugt das Automatisierungsgerät 7 gemäß vorbestimmter Regeln eine Alarmmeldung, die an das Prozessabbild 9 des Operator Station Servers 2 übertragen wird.

Der Alarmmeldungsdient 8 übermittelt dem Visualisierungsdienst 10 die Information über die neu erzeugte / aufgekommene Alarmmeldung. Der Visualisierungsdienst 10 prüft darauf hin, ob die Alarmmeldung mit dem variablen Bildelement 12 assoziiert ist, d.h., ob das variable Bildelement 12 eine Referenz auf die Alarmmeldung aufweist, Genau genommen weist das variable Bildelement 12 dabei nicht eine Referenz auf die (instanziierte) Alarmmeldung, sondern auf den Typ der Alarmmeldung auf. Dies wird in der vorliegenden Offenbarung dadurch ausgedrückt, dass das variable Bildelement 12 eine Referenz auf eine bestimmte "aufkommbare" Alarmmeldung aufweist. Der Visualisierungsdienst 10 kann pauschal jede aufkommende Alarmmeldung prüfen, ob der zugrunde liegende Typ der jeweiligen Alarmmeldung von einem variablen Bildelement 12 referenziert ist. Die Alarrimeldung(en) kann aber auch ein spezielles, zusätzliches Attribut aufweisen, welches auf die Assoziierung mit dem variablen Bildelement 12 hinweist, so dass der Visualisierungsdienst 10 weniger Kapazitäten für die Erkennung der Referenzen aufwenden muss.

Liegt eine solche Referenz bei der erzeugten / aufgekommenen Alarmmeldung vor, bestimmt der Visualisierungsdienst 10, dass in dem variablen Bildelement 12 ein Objekt 14 visuell und ggf. akustisch dargestellt wird, welches von der Alarmmeldung referenziert ist. Alternativ oder zusätzlich kann die Referenz auf das darzustellende Objekt 14 auch mit dem variablen Bildelement 12 verbunden sein. Wichtig ist nur, dass bei einem Auftreten einer Alarmmeldung, die einen vorherbestimmten Typ aufweist, in einem zugewiesene variablen Bildelement 12 das vorherbestimmte Objekt 14 visuell (und ggf. akustisch) dargestellt wird. Das vorherbestimmte Objekt 14 muss dabei über von dem Visualisierungsdienst 10 in die Bilderzeugung für den Operator Station Client 3 einbindbar sein.

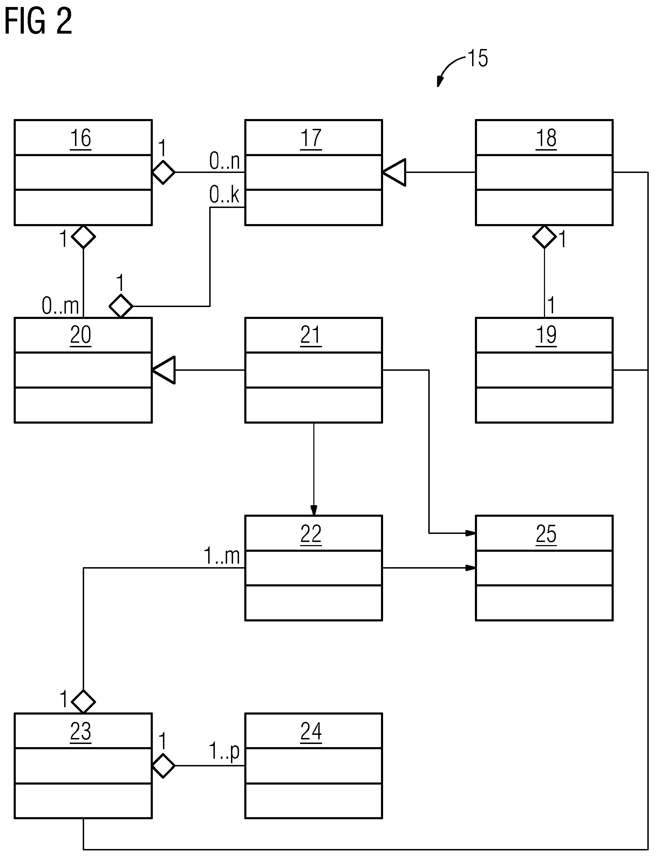

In FIG 2 ist ein zu dem Leitsystem 1 gehöriges Objektmodell 15 dargestellt. Ein Anlagenbild 16 setzt sich aus 1 bis n Bildelementen 17 (Screen Items) zusammen. Eine Spezialisierung eines Bildelementes 18 ist beispielsweise ein Blocksymbol eines technischen Objektes der technischen Anlage, welches wiederum beispielsweise ein Anwenderobjekt 19 (auch als "Faceplate" bezeichnet) darstellen kann.

Das Anlagenbild 16 kann 1 bis m weitere Anlagenbilder 20 umfassen (auch als "Screen Windows" bezeichnet), die innerhalb des Anlagenbildes 16 dargestellt werden können. Ein spezielles dieser weiteren Anlagenbilder 20 ist ein dynamisches Bildelement 21. Instanzen dieses dynamischen Bildelementes 21 können Referenzen auf Typen von Alarmmeldungen 22 aufweisen. Die Alarmmeldungen 22 sind wiederum mit technischen Objekten 23 bzw. den dazugehörigen Tags 24 verknüpft. Die Alarmmeldungen 22 und die dynamischen Bildelemente 21 weisen jeweils eine Referenz auf ein Objekt 25 auf, welches zuvor schon erläutert wurde.

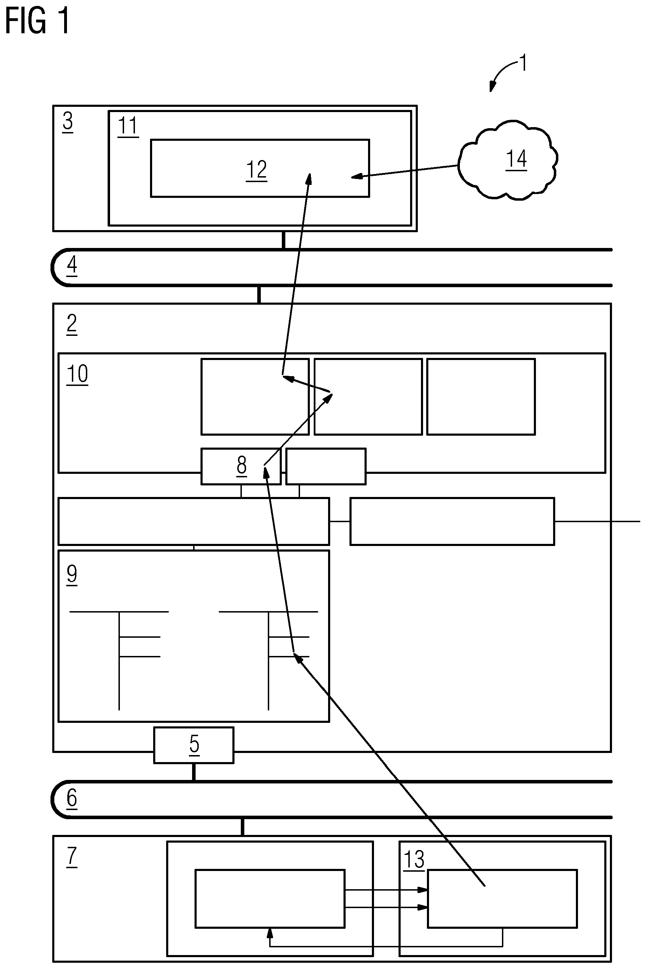

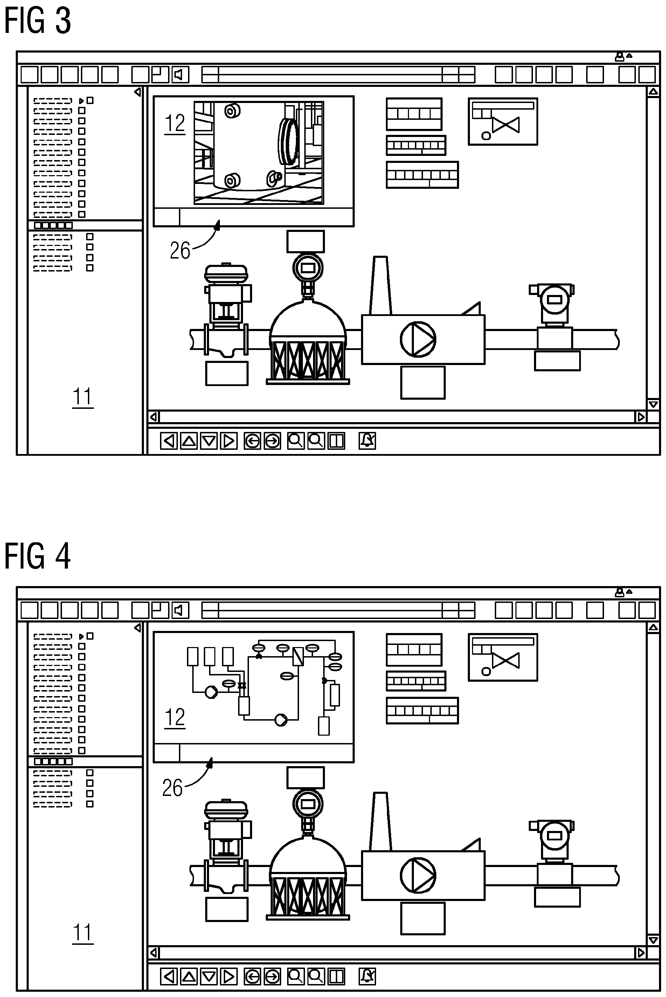

In FIG 3 ist das Anlagenbild 11 aus FIG 1 vergrößert und ohne weitere Teile des Leitsystems 1 dargestellt. Es ist zu erkennen, dass das Anlagenbild 11 neben verschiedenen Symbolen ein variables Bildelement 12 aufweist, welches durch eine dickere Umrandung gekennzeichnet ist. In dem variablen Bildelement 12 ist ein Kamerabild 14 dargestellt, welches ein verfahrenstechnisches Objekt zeigt.

FIG 4 zeigt das Anlagenbild 12. aus FIG 3, wobei in dem variablen Bildelement 12 ein Rohrleitungsplan einer verfahrenstechnischen Anlage dargestellt ist.

Insgesamt kann durch die Erfindung ein Beitrag für eine höhere Verlässlichkeit und eine verbesserte Bedienbarkeit des Leitsystems der technischen Anlage geleistet werden, speziell bei Anwendung eines webbasierten Leitsystems.

## Patentansprüche

1. Leitsystem (1) für eine technische Anlage, insbesondere Prozess- oder Fertigungsanlage, das einen Operator Station Server (2) und einen Operator Station Client (3) aufweist, wobei der Operator Station Server (2) dazu ausgebildet ist, zur Bedienung und Beobachtung ein Anlagenbild (11) der technischen Anlage an den Operator Station Client (3) zu übertragen, wobei das Anlagenbild (11) wenigstens ein variables Bildelement (12) umfasst,
und wobei der Operator Station Client (3) dazu ausgebildet ist, das Anlagenbild (11) mit dem variablen Bildelement (12) einem Operator der technischen Anlage visuell, und gegebenenfalls akustisch, darzustellen,
und wobei auf dem Operator Station Server (2) ein Alarmdienst (8) implementiert ist, der dazu ausgebildet ist, im Leitsystem (1) aufkommende Alarmmeldungen (8) zur Darbietung für den Operator an den Operator Station Client (3) zu übertragen,
**dadurch gekennzeichnet, dass**
das Leitsystem (1) dazu ausgebildet ist, das variable Bildelement (12) mit einer Referenz auf eine bestimmte aufkommbare Alarmmeldung und die bestimmte aufkommbare Alarmmeldung und/oder das variable Bildelement (12) mit einer Referenz auf ein Objekt (14) zu versehen, derart, dass bei einem Aufkommen der bestimmten aufkommbaren Alarmmeldung das Objekt (14) in dem variablen Bildelement (12) visuell und gegebenenfalls akustisch dargestellt wird, wobei das Objekt (14) eine Echtzeit-Bilddatenquelle, ein weiteres Anlagenbild, ein Video oder ein Dokument darstellt,
und wobei das Leitsystem (1) dazu ausgebildet ist, in einem Zeitbereich, in dem keine der bestimmten Alarmmeldungen aufkommt, in dem variablen Bildelement (12) eine visuelle und ggf. akustische Darstellung eines von dem oder den referenzierten Objekten (14) verschiedenen Objektes zu erzeugen.

2. Leitsystem (1) nach Anspruch 1, bei dem das Anlagenbild (11) eine Mehrzahl von variablen Bildelementen (12) umfasst, wobei das Leitsystem (1) dazu ausgebildet ist, die variablen Bildelemente (12) jeweils mit einer Referenz auf eine bestimmte aufkommbare Alarmmeldung und die bestimmte aufkommbare Alarmmeldung und/oder die variablen Bildelemente (12) mit einer Referenz auf ein Objekt (14) zu versehen, derart, dass bei einem Aufkommen der bestimmten aufkommenden Alarmmeldung das Objekt jeweils in dem variablen Bildelement (12) visuell und gegebenenfalls akustisch dargestellt wird, wobei sich die bestimmten aufkommbaren Bildelemente und die Objekte (14) voneinander unterscheiden können.

3. Leitsystem (1) nach Anspruch 1 oder 2, bei dem das Leitsystem (1) dazu ausgebildet ist, in dem variablen Bildelement (12) oder in der Mehrzahl von variablen Bildelementen (12) bei einer aufkommenden, referenzierten Alarmmeldung zusätzlich zu dem referenzierten Objekt (14) noch Informationen die Alarmmeldung betreffend darzustellen, insbesondere einen Alarmmeldungstext.

4. Leitsystem (1) nach einem der vorangegangenen Ansprüche, bei dem das Leitsystem (1) dazu ausgebildet ist, das variable Bildelement (12) oder die Mehrzahl von variablen Bildelementen (12) mit einer Mehrzahl von Referenzen auf bestimmte aufkommbare Alarmmeldungen und die bestimmten aufkommbaren Alarmmeldungen und/oder die variablen Bildelemente (12) jeweils mit einer Referenz auf ein Objekt (14) zu versehen, derart, dass bei einem Aufkommen eines der bestimmten aufkommbaren Alarmmeldungen das jeweilige referenzierte Objekt (14) in dem variablen Bildelement (12) visuell und gegebenenfalls akustisch dargestellt wird.

5. Leitsystem (1) nach Anspruch 4, bei dem das Leitsystem (1) dazu ausgebildet ist, für den Fall, dass mehrere der referenzierten aufkommbaren Alarmmeldungen in einem gleichen Zeitraum aufkommen, dasjenige Objekt (14) in dem variablen Bildelement (12) darzustellen, welches von derjenigen aufkommenden Alarmmeldung referenziert ist, welche eine höchste Priorität oder einen jüngsten Zeitrang aufweist oder welche nicht quittiert ist.

6. Leitsystem (1) nach Anspruch 4, bei dem das Leitsystem (1) dazu ausgebildet ist, für den Fall, dass mehrere der referenzierten aufkommbaren Alarmmeldungen in einem gleichen Zeitraum aufkommen, die von den aufkommenden Alarmmeldungen und/oder den variablen Bildelementen (12) referenzierten Objekte (14) von einem Operator des Leitsystems (1) manuell wechselbar oder in einem automatischen zeitlichen Wechsel darzustellen.

7. Verfahren zum Betrieb einer technischen Anlage, insbesondere Prozess- oder Fertigungsanlage, die ein Leitsystem (1) aufweist, welches einen Operator Station Server (2) und einen Operator Station Client (3) aufweist, und wobei der Operator Station Client (3) dazu ausgebildet ist, ein Anlagenbild (11) mit einem variablen Bildelement (12) einem Operator der technischen Anlage visuell, und gegebenenfalls akustisch, darzustellen, und wobei auf dem Operator Station Server (2) ein Alarmdienst (8) implementiert ist, der dazu ausgebildet ist, im Leitsystem (1) aufkommende Alarmmeldungen zur Darbietung für den Operator an den Operator Station Client (3) zu übertragen, das Verfahren umfassend:
a) Versehen des variablen Bildelementes (12) mit einer Referenz auf eine bestimmte aufkommbare Alarmmeldung,
b) Versehen der bestimmten aufkommbaren Alarmmeldung mit einer Referenz auf ein Objekt (14),
c) Bei einem Aufkommen der bestimmten aufkommbaren Alarmmeldung, visuelle und gegebenenfalls akustische Darstellung des Objektes (14) in dem variablen Bildelement (12) durch den Operator Station Client (3), wobei das Objekt (14) eine Echtzeit-Bilddatenquelle, ein weiteres Anlagenbild, ein Video oder ein Dokument darstellt,
wobei in einem Zeitbereich, in dem keine der bestimmten Alarmmeldungen aufkommt, in dem variablen Bildelement (12) eine visuelle und ggf. akustische Darstellung eines von dem oder den referenzierten Objekten (14) verschiedenen Objektes (14) erzeugt wird.

8. Verfahren nach Anspruch 7, bei dem eine Mehrzahl von variablen Bildelementen jeweils mit einer Referenz auf eine oder mehrere bestimmte aufkommbare Alarmmeldungen versehen wird, und bei dem die bestimmte aufkommbare oder die bestimmten aufkommbaren Alarmmeldungen jeweils mit einer Referenz auf ein Objekt (14) versehen werden, wobei es sich um ein einziges Objekte (14) oder um eine Mehrzahl von Objekte (14) handeln kann, wobei bei einem Aufkommen einer der bestimmten aufkommbaren Alarmmeldungen eine visuelle und gegebenenfalls akustische Darstellung des Objektes (14) oder der Objekte (14) in dem oder den variablen Bildelementen (12) durch den Operator Station Client (3) erfolgt.

9. Verfahren nach Anspruch 7 oder 8, bei dem in dem variablen Bildelement (12) oder in der Mehrzahl von variablen Bildelementen (12) bei einer aufkommenden, referenzierten Alarmmeldung zusätzlich zu dem referenzierten Objekt (14) noch Informationen die Alarmmeldung betreffend dargestellt werden, insbesondere eine Alarmmeldungstext.

10. Verfahren nach einem der Ansprüche 7 bis 9, bei dem das variable Bildelement (12) oder die Mehrzahl von variablen Bildelementen (12) mit einer Mehrzahl von Referenzen auf bestimmte aufkommbare Alarmmeldungen und die bestimmten aufkommbaren Alarmmeldungen jeweils mit einer Referenz auf ein Objekt (14) versehen wird, derart, dass bei einem Aufkommen eines der bestimmten aufkommbaren Alarmmeldungen das jeweilige referenzierte Objekt (14) in dem variablen Bildelement (12) visuell und gegebenenfalls akustisch dargestellt wird.

11. Verfahren nach einem der Ansprüche 7 bis 10, bei dem für den Fall, dass mehrere der referenzierten aufkommbaren Alarmmeldungen in einem gleichen Zeitraum aufkommen, das Objekt (14) in dem variablen Bildelement (12) dargestellt wird, welches von derjenigen aufkommenden Alarmmeldung referenziert ist, welche eine höchste Priorität oder einen jüngsten Zeitrang aufweist oder welche nicht quittiert ist.

12. Verfahren nach einem der Ansprüche 7 bis 10, bei dem für den Fall, dass mehrere der referenzierten aufkommbaren Alarmmeldungen in einem gleichen Zeitraum aufkommen, die von den aufkommenden Alarmmeldungen referenzierten Objekte (14) von einem Operator des Leitsystems (1) manuell wechselbar oder in einem automatischen zeitlichen Wechsel dargestellt werden.

## Claims

1. Control system (1) for a technical plant, in particular processing or manufacturing plant, which has an operator station server (2) and an operator station client (3), wherein for activation and monitoring, the operator station server (2) is embodied to transmit a plant diagram (11) of the technical plant to the operator station client (3), wherein the plant diagram (11) comprises at least one variable diagram element (12),
and wherein the operator station client (3) is embodied to visually, and optionally acoustically, represent the plant diagram (11) with the variable diagram element (12) to an operator of the technical plant,
and wherein an alarm service (8) is implemented on the operator station server (2), and is embodied to transmit alarm notifications (8) occurring in the control system (1) to the operator station client (3) for presentation to the operator,
**characterised in that**
the control system (1) is embodied to provide the variable diagram element (12) with a reference to a particular alarm notification that can occur and the particular alarm notification that can occur and/or the variable diagram element (12) with a reference to an object (14) in such a way that when the particular alarm notification that can occur does occur, the object (14) is visually and optionally acoustically represented in the variable diagram element (12), wherein the object (14) represents a real-time diagram data source, a further plant diagram, a video or a document,
and wherein in a time range in which none of the particular alarm notifications occurs, the control system (1) is embodied to generate in the variable diagram element (12) a visual and optionally an acoustic representation of an object different from the referenced object(s) (14).

2. Control system (1) according to claim 1, wherein the plant diagram (11) comprises a plurality of variable diagram elements (12), wherein the control system (1) is embodied to provide the variable diagram elements (12) with one reference respectively to a particular alarm notification that can occur and the particular alarm notification that can occur and/or the variable diagram elements (12) with a reference to an object (14) in such a way that when the particular alarm notification that can occur does occur, the object is respectively visually and optionally acoustically represented in the variable diagram element (12), wherein the particular diagram elements that can occur and the objects (14) can differ from each other.

3. Control system (1) according to claim 1 or 2, wherein, in addition to the referenced object (14), the control system (1) is embodied to also represent items of information relating to the alarm notification, in particular an alarm notification text, in the variable diagram element (12) or in the plurality of variable diagram elements (12) when a referenced alarm notification occurs.

4. Control system (1) according to one of the preceding claims,
wherein the control system (1) is embodied to provide the variable diagram element (12) or the plurality of variable diagram elements (12) with a plurality of references to particular alarm notifications that can occur and the particular alarm notifications that can occur and/or the variable diagram elements (12) with one reference respectively to an object (14), in such a way that when one of the particular alarm notifications that can occur does occur, the respective referenced object (14) is visually and optionally acoustically represented in the variable diagram element (12).

5. Control system (1) according to claim 4, wherein for the case where a plurality of the referenced alarm notifications that can occur do occur in the same period, the control system (1) is embodied to represent that object (14) in the variable diagram element (12) which is referenced by that alarm notification that occurs, which has the highest priority or the most recent time ranking or which has not been acknowledged.

6. Control system (1) according to claim 4, wherein for the case where a plurality of the referenced alarm notifications that can occur do occur in the same period, the control system (1) is embodied to represent the objects (14) referenced by the occurring alarm notifications and/or the variable diagram elements (12) in a manner which can be manually changed by an operator of the control system (1) or in a manner which changes automatically over time.

7. Method for operating a technical plant, in particular processing or manufacturing plant, which has a control system (1), which has an operator station server (2) and an operator station client (3), and wherein the operator station client (3) is embodied to visually, and optionally acoustically, represent a plant diagram (11) with a variable diagram element (12) to an operator of the technical plant, and wherein an alarm service (8) is implemented on the operator station server (2) and is embodied to transmit alarm notifications occurring in the control system (1) to the operator station client (3) for presentation to the operator, the method comprising:
a) providing the variable diagram element (12) with a reference to a particular alarm notification that can occur,
b) providing the particular alarm notification that can occur with a reference to an object (14),
c) when the particular alarm notification that can occur does occur, visual and optionally acoustic representation of the object (14) in the variable diagram element (12) by the operator station client (3), wherein the object (14) represents a real-time diagram data source, a further plant diagram, a video or a document,
wherein in a time range in which none of the particular alarm notifications occurs, a visual and optionally an acoustic representation of an object (14) different from the referenced object(s) (14) is generated in the variable diagram element (12).

8. Method according to claim 7, wherein a plurality of variable diagram elements is provided with one reference respectively to one or more particular alarm notification(s) that can occur, and wherein the particular alarm notification(s) that can occur are provided with one reference respectively to an object (14), wherein this can be a single object (14) or a plurality of objects (14), wherein when one of the particular alarm notifications that can occur does occur, the object (14) or the objects (14) is/are visually and optionally acoustically represented in the variable diagram element(s) (12) by the operator station client (3).

9. Method according to claim 7 or 8, wherein, in addition to the referenced object (14), items of information relating to the alarm notification, in particular an alarm notification text, are also represented in the variable diagram element (12) or in the plurality of variable diagram elements (12) when a referenced alarm notification occurs.

10. Method according to one of claims 7 to 9, wherein the variable diagram element (12) or the plurality of variable diagram elements (12) is provided with a plurality of references to particular alarm notifications that can occur and the particular alarm notifications that can occur is provided with one reference respectively to an object (14) in such a way that when one of the particular alarm notifications that can occur does occur, the respective referenced object (14) is visually and optionally acoustically represented in the variable diagram element (12).

11. Method according to one of claims 7 to 10, wherein for the case where a plurality of the referenced alarm notifications that can occur does occur in the same period, the object (14) is represented in the variable diagram element (12) which is referenced by that alarm notification that occurs, which has the highest priority or the most recent time ranking or which has not been acknowledged.

12. Method according to one of claims 7 to 10, wherein for the case where a plurality of the referenced alarm notifications that can occur does occur in the same period, the objects (14) referenced by the occurring alarm notifications are represented in a manner which can be manually changed by an operator of the control system (1) or in a manner which changes automatically over time.

## Revendications

1. Système (1) de conduite d'une installation technique, en particulier d'une installation de processus ou de fabrication, qui a un operator station server (2) et un operator station client (3), dans lequel l'operator station server (2) est constitué pour transmettre, pour le service et l'observation, une image (11) de l'installation technique à l'operator station client (3), dans lequel l'image (11) de l'installation comprend au moins un élément (12) d'image variable,
et dans lequel l'operator station client (3) est constitué pour représenter visuellement et, le cas échéant, acoustiquement l'image (11) de l'installation avec l'élément (12) d'image variable à un opérateur de l'installation technique,
et dans lequel sur l'operator station server (2), est mis en œuvre un service (8) d'alerte, qui est constitué pour transmettre à l'operator station client (3), pour la représentation à l'opérateur, des messages (8) d'alerte arrivant dans le système (1) de conduite,
**caractérisé en ce que**
le système (1) de conduite est constitué pour munir l'élément (12) d'image variable d'une référence à un message d'alerte déterminé pouvant arriver et pour munir le message d'alerte déterminé pouvant arriver et/ou l'élément (12) d'image variable d'une référence à un objet (14), de manière à ce que, à l'arrivée du message d'alerte déterminé pouvant arriver, l'objet (14) soit représenté visuellement et, le cas échéant, acoustiquement dans l'élément (12) d'image variable, dans lequel l'objet (14) représente une source de données d'image en temps réel, une autre image de l'installation, une vidéo ou un document,
et dans lequel le système (1) de conduite est constitué pour produire, dans un laps de temps, dans lequel il n'arrive pas de message d'alerte déterminé dans l'élément (12) d'image variable, une représentation visuelle et, le cas échéant acoustique, d'un objet différent de l'objet référencé ou des objets (14) référencés.

2. Système (1) de conduite suivant la revendication 1, dans lequel l'image (11) de l'installation comprend une pluralité d'éléments (12) d'image variables, dans lequel le système (1) de conduite est constitué pour munir les éléments (12) d'image variables respectivement d'une référence à un message d'alerte déterminé pouvant arriver et/ou pour munir le message d'alerte déterminé pouvant arriver et/ou les éléments (12) d'image variables d'une référence à un objet (14), de manière à ce que, à l'arrivée du message d'alerte déterminé arrivant, l'objet soit représenté visuellement et, le cas échéant, acoustiquement respectivement dans l'élément (12) d'image variable, dans lequel les éléments d'image déterminés pouvant arriver et les objets (14) peuvent être différents les uns des autres.

3. Système (1) de conduite suivant la revendication 1 ou 2, dans lequel le système (1) de conduite est constitué pour représenter, dans l'élément (12) d'image variable ou dans la pluralité d'éléments (12) d'image variables, lors de l'arrivée d'un message d'alerte référencé, supplémentairement à l'objet (14) référencé, encore des informations concernant le message d'alerte, en particulier un texte de message d'alerte.

4. Système (1) de conduite suivant l'une des revendications précédentes, dans lequel le système (1) de conduite est constitué pour munir l'élément (12) d'image variable ou la pluralité d'éléments (12) d'image variables d'une pluralité de références à des messages d'alerte déterminés pouvant arriver et les messages d'alerte déterminés pouvant arriver et/ou les éléments (12) d'image variables, respectivement d'une référence à un objet (14), de manière à ce que, à l'arrivée de l'un des messages d'alerte déterminés pouvant arriver, l'objet (14) respectif référencé soit représenté visuellement et, le cas échéant, acoustiquement dans l'élément (12) d'image variable.

5. Système (1) de conduite suivant la revendication 4, dans lequel le système (1) de conduite est constitué, pour le cas où plusieurs des messages d'alerte référencés pouvant arriver arrivent dans un même laps de temps, représenter l'objet (14) dans l'élément (12) d'image variable, qui est référencé par le message d'alerte arrivant, qui a une priorité la plus grande ou un rang dans le temps le plus récent ou dont on n'a pas accusé réception.

6. Système (1) de conduite suivant la revendication 4, dans lequel le système (1) de conduite est constitué, pour le cas où plusieurs des messages d'alerte référencés pouvant arriver arrivent dans un même laps de temps, représenter d'une manière pouvant être changée manuellement par un opérateur du système (1) de conduite ou suivant un changement automatique dans le temps, les messages d'alerte arrivant et/ou des objets (14) référencés aux éléments (12) d'image variables.

7. Procédé pour faire fonctionner une installation technique, en particulier une installation de processus ou de fabrication, qui a un système (1) de conduite, lequel a un operator station server (2) et un operator station client (3), et dans lequel l'operator station client (3) est constitué pour représenter visuellement et, le cas échéant, acoustiquement une image (11) de l'installation par un élément (12) d'image variable à un opérateur de l'installation technique, et dans lequel, sur l'operator station server (2), est mis en œuvre un service (8) d'alerte, qui est constitué pour transmettre à l'operator station client (3), pour la représentation à l'opérateur, des messages d'alerte arrivant dans le système (1) de conduite, le procédé comprenant :
a) munir l'élément (12) d'image variable d'une référence à un message d'alerte déterminé pouvant arriver,
b) munir le message d'alerte déterminé pouvant arriver d'une référence à un objet (14),
c) à l'arrivée du message d'alerte déterminé pouvant arriver, représenter visuellement et, le cas échéant, acoustiquement l'objet (14) dans l'élément (12) d'image variable par l'operator station client (3), dans lequel l'objet (14) représente une source de données d'image en temps réel, une autre image de l'installation, une vidéo ou un document,
dans lequel dans un laps de temps, dans lequel il n'arrive pas de message d'alerte déterminé, on produit dans l'élément (12) d'image variable une représentation visuelle et, le cas échéant, acoustique d'un objet (14) différent de l'objet référencé ou des objets (14) référencés.

8. Procédé suivant la revendication 7, dans lequel on munit une pluralité d'éléments d'image variables respectivement d'une référence à un ou à plusieurs messages déterminés pouvant arriver, et dans lequel on munit le message d'alerte déterminé pouvant arriver ou les messages d'alerte déterminés pouvant arriver respectivement d'une référence à un objet (14), dans lequel il peut s'agir d'un objet (14) unique ou d'une pluralité d'objets (14), dans lequel à l'arrivée de l'un des messages d'alerte déterminés pouvant arriver, a lieu par l'operator station client (3) une représentation visuelle et, le cas échéant, acoustique de l'objet (14) ou des objets (14) dans le ou les éléments (12) d'image variables.

9. Procédé suivant la revendication 7 ou 8, dans lequel dans les éléments (12) d'image variables ou dans la pluralité d'éléments (12) d'image variables, on représente, lors d'un message d'alerte référencé arrivant, supplémentairement à l'objet (14) référencé, encore des informations concernant le message d'alerte, en particulier un texte d'accusé de réception du message d'alerte.

10. Procédé suivant l'une des revendications 7 à 9, dans lequel on munit l'élément (12) d'image variable ou la pluralité d'éléments (12) variables d'une pluralité de références à des messages d'alerte déterminés pouvant arriver et les messages d'alerte déterminés pouvant arriver respectivement d'une référence à un objet (14), de manière à ce que, à l'arrivée de l'un des messages d'alerte déterminés pouvant arriver, l'élément (14) respectif référencé soit représenté visuellement et, le cas échéant, acoustiquement dans l'élément (12) d'image variable.

11. Procédé suivant l'une des revendications 7 à 10, dans lequel, dans le cas où plusieurs des messages d'alertes référencés pouvant arriver arrivent dans un même laps de temps, on représente l'objet (14) dans l'élément (12) d'image variable, qui est référencé par le message d'alerte arrivant ayant une priorité la plus grande ou un rang dans le temps le plus récent ou dont on n'a pas accusé réception.

12. Procédé suivant l'une des revendications 7 à 10, dans lequel, dans le cas où plusieurs des messages d'alerte référencés pouvant arriver arrivent dans un même laps de temps, les objets (14) référencés par les messages d'alerte arrivant sont représentés, de manière à pouvoir être changés manuellement par un opérateur du système (1) de conduite ou suivant un changement automatique dans le temps.
